# EUROPEAN PATENT APPLICATION

(11) **EP 4 787 372 A1**
(43) Date of publication of application: **05.08.2026**
(21) Application number: 25155093.5
(22) Date of filing: 30.01.2025
(51) Int. Cl.: G10L 25/30, G10L 25/18

(54) **ULTRA LOW MEMORY AND LOW COMPLEXITY DNN-BASED SPEECH ENHANCEMENT FOR DSPS**

(71) Applicant: Fraunhofer-Gesellschaft zur Förderung der angewandten Forschung e.V., 80686 München (DE)
(72) Inventor: SHETU, Shrishti Saha, 91058 Erlangen (DE); MARTINEZ APONTE, Jose Miguel, 91058 Erlangen (DE); VITTAPPAN, Sharvin, 91058 Erlangen (DE); THIERGART, Oliver, 91058 Erlangen (DE); EFTEKHARI, Hesam, 91058 Erlangen (DE); INGALESHWAR, Subodh, 91058 Erlangen (DE); CHETUPALLI, Srikanth Raj, 91058 Erlangen (DE); KURUDUGANAHALLI SUDHINDRA RAO, Nagashree, 91058 Erlangen (DE); MABANDE, Edwin, 91058 Erlangen (DE); FRANCIS, Maria Avitha, 91058 Erlangen (DE); BÖHME, Martina, 91058 Erlangen (DE); MILANO, Guendalina, 91058 Erlangen (DE); MAHNE, Dirk, 93047 Regensburg (DE); WILD, Moritz, 91058 Erlangen (DE); DESIRAJU, Naveen Kumar, 91058 Erlangen (DE); CAPPELLATO, Alessio, 91058 Erlangen (DE)
(74) Representative: Zuccollo, Alberto

(57) **Abstract**

There is disclosed an apparatus (10) for processing an input audio signal (20), comprising:
a feature extractor (100) for extracting a set of features (332) from values (102) of the input audio signal (20);
a first neural network, NN, processor (340), to process the set of features (332) through a first NN, to obtain a version of the set of features (342) as a first tensor having a frequency dimension with spectral values;
a feature segmenter (345), to segment the first tensor (342) into a plurality of feature subbands (346);
a second NN processor (370), to process each of the plurality of feature subbands (346) through a common second NN, to obtain a set of result subbands (371);
a result composer (375), to compose the result subbands (371) onto one single second tensor (352) having a frequency dimension.

## Description

The present invention relates to neural network based systems and methods for audio processing. For example, the invention relates to Ultra Low Memory and Low Complexity DNN-Based Speech Enhancement for DSPs. The invention is implemented both in apparatuses and in methods and in non-transitory storage units storing instructions which, when executed by a processor, cause the processor to perform the methods and/or to perform the operations of the apparatuses.

### Background

Deep learning (DL) based solutions for different problems in the field of audio processing have recently become common and shown improved performance over classical signal processing-based methods. However, one of the main issues with most of the developed methods is their complexity, both computational as well as memory, which makes them unsuitable for deployment on digital signal processors (DSPs) and even in some cases on different embedded devices which generally come with memory as well as computational constraints.

Techniques are presented for designing improved processing blocks for input and output pre-processing for robust low complexity deep neural network (DNN) based audio processing methods and techniques for both computational complexity and memory reduction. Also, the proposed techniques presented in the context of a DNN based noise reduction solution, are applicable for other DNN based solutions for problems in audio processing that require reconstruction/classification/synthesis of audio signal at the output, e.g., dereverberation, echo cancellation, speech/audio coding, audio scene analysis, and audio classification etc.

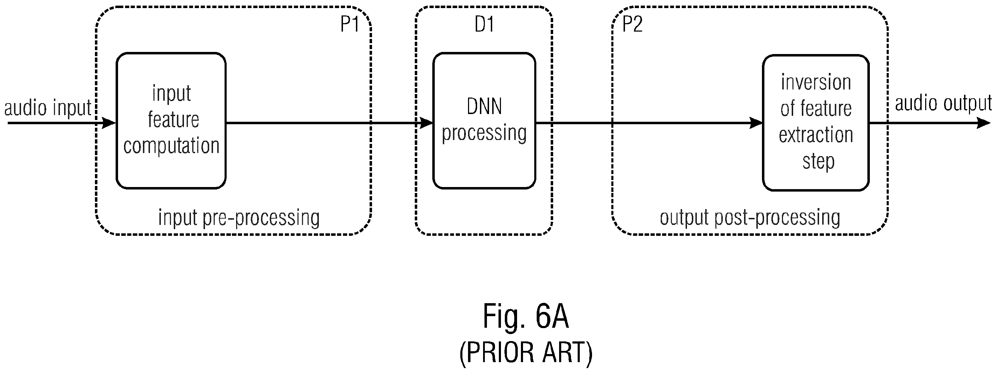

A processing pipeline for DNN based low complexity audio processing methods is shown in Fig. 6A. The input for such methods is generally an audio waveform which is also referred to as the time-domain audio signal. The first block in this pipeline is the input pre-processing block (Block P1). The feature extraction in this block can be either a deterministic time-frequency transform such as short-time Fourier transform (STFT) or be a set of features learnt via backpropagation for a specific application. Following the feature extraction step, a multidimensional (typically 2D or 3D) tensor is obtained which is then processed with feature reorientation block (CR1) before providing as an input to the main DNN processing block (block D1).

The block D1 operates on the provided input to perform the task for which it is designed. For example, in the case of mask-based noise reduction/speech enhancement, D1 can be a DNN mask estimator that estimates a mask to obtain an enhanced version of the feature representation of the audio input that only consists of the feature representation of the speech component and eliminates the non-speech components.

The output of D1 is then provided as input to the output post-processor (block P2). The P2 block might be optional for some applications, e.g. classification tasks. The output post-processing block mainly consists of feature merging to original dimensions block and inversion of feature extraction step applied in P1 to obtain the final audio output. For example, taking the same application scenario of noise reduction/speech enhancement as above, the block P2 would consist of the masking operation where the estimated mask from D1 is first merged to original dimension and then applied to the original feature representation of the input signal to obtain the enhanced feature representation to which the final inversion operation is applied to obtain the output audio waveform.

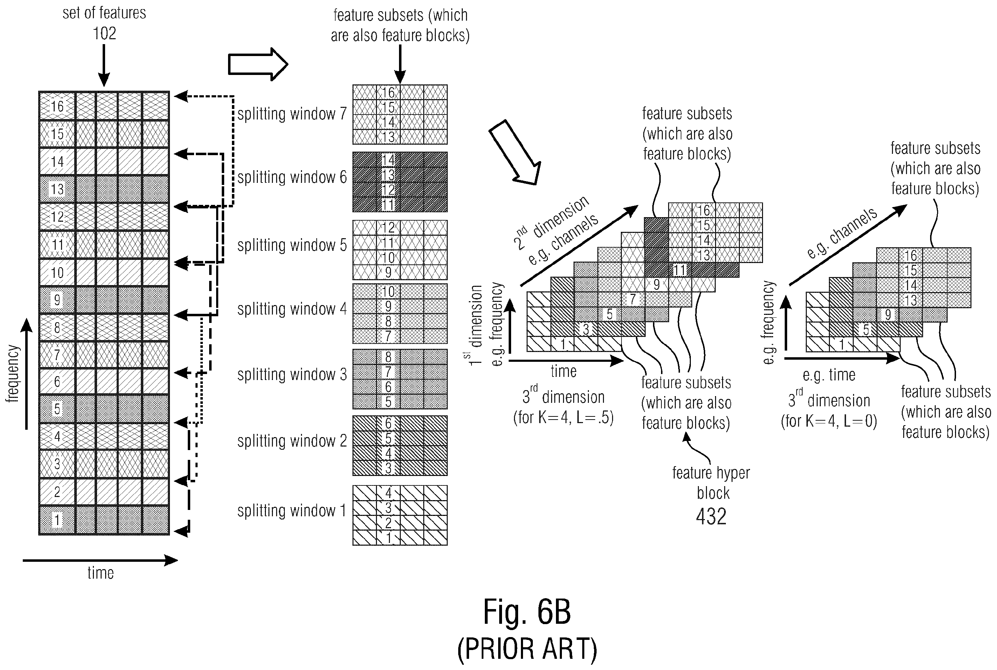

A visual representation of prior art channelwise subband splitting is shown in Fig. 6B. We show two examples here. In the first example, we use subband length of K=4, overlap factor L=0.5, resulting in 7 uniform segments, which are then stacked along the channel dimension.

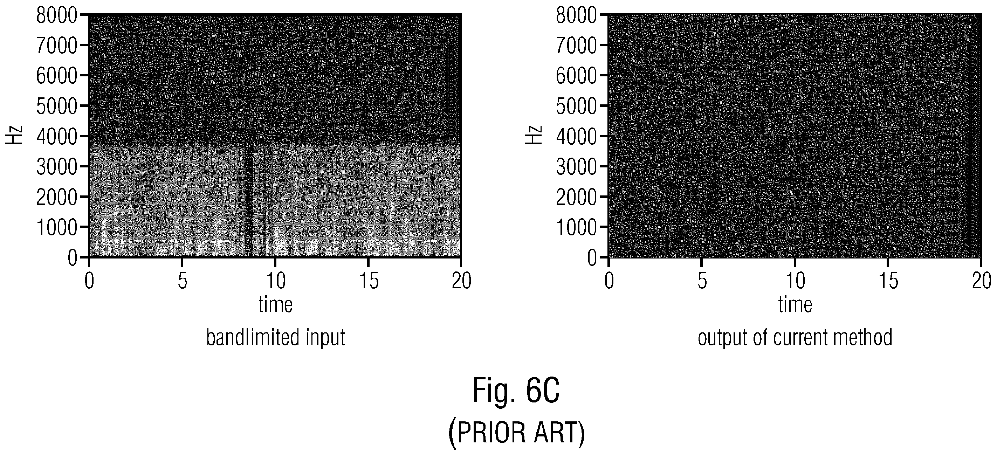

This approach has been successfully used for complexity reduction by decreasing the spatial (frequency) dimension of the input by assuming that the first part of D1 processing block consists of convolutional layers. However, there are some limitations of this approach:
- **Depthwise correlations:** This approach doesn't consider the depth wise correlation of the input features (i.e. the correlation of the input features along the second dimension, i.e. the channel dimension; "depth dimension" means the "channel dimension" or "second dimension"). For example, in Fig. 6B, for the second example, where K=4 and L=0, the time frequency (TF) bins of the first channel (1, 2, 3, 4) and the second channel (5, 6, 7, 8) are not necessarily correlated in terms of their position in the depth/channel dimension. The closest TF bin to 1 in the depth dimension is 5. The distance between features in the depth dimension increase much more significantly when the spatial/frequency dimension of input features increases.
- **TF Feature correlations:** This approach also cannot make use of the correlation properties of the TF (block) features for increasing the convolutional receptive field. In example shown in Fig. 6C, if the first convolutional layer of D1 processing block is using a kernel size of 3 in the frequency dimension, the effective receptive field will be limited to 3, as the features in the depth dimension are not correlated.
- **Signal bandwidth:** The audio processing system is typically designed for a specific sampling rate with signals occupying the full spectral range possible. However, in practice, it is not possible to guarantee the full coverage of the spectrum. This is specifically true for commercial hardware where the sampling rate of the system matches the designed setting, but the system has low-pass components which limit the spectrum range to a subset of the frequencies (see Fig. 6C). This poses a serious problem to DNN based processing, as the feature distribution of the example is very different from the features for which it is designed. This often leads to a complete suppression of the signal as illustrated in Fig. 6C or the signal is passed unaltered, both of which are undesired. Performance of our previous approach also suffers, if the input audio is bandpass filtered, i.e., referred to in the following, as the band limitation problem. As this splitting method is done in sequential order, some of the channels will totally be zeros. This results in an unpredictable behavior of the DNN model in D1 processing block.

In the previous published patent applications PCT/EP2024/058156 (WO2024200469), and PCT/EP2024/058157 (WO2024200470 A1), there are proposed channelwise subband splitting. An aim of this subband splitting is to split the features from feature extraction step into many uniform overlapping segments and each split segment is then arranged along a new dimension, referred to as the channel dimension to obtain the final input feature representation for the DNN processing.

### Summary

According to an aspect, there is provided an apparatus for processing an input audio signal, comprising:
a feature extractor for extracting a set of features from values of the input audio signal;
a first neural network, NN, processor, to process the set of features through a first NN, to obtain a version of the set of features as a first tensor having a frequency dimension with spectral values;
a feature segmenter, to segment the first tensor into a plurality of feature subbands;
a second NN processor, to process each of the plurality of feature subbands through a common second NN, to obtain a set of result subbands;
a result composer, to compose the result subbands onto one single second tensor having a frequency dimension.

According to an aspect there is provided an apparatus for processing an input audio signal, comprising:
a first magnitude-processing processor configured for extracting a single second magnitude tensor from magnitude values of the input audio signal; and
a magnitude-and-phase feature combiner, to combine the single second magnitude tensor with phase values of the input audio signal, to obtain a complex set of features in the shape of a first complex tensor;
a complex-processing portion processor configured to apply a third NN to the complex tensor, to obtain a complex result which is a processed version of the input audio signal,
wherein the complex-processing processor is configured to reshape the first complex tensor from a first shape to a second, hyper block shape, to obtain a complex hyperblock in the second shape, by:
   segmenting the first complex tensor into a plurality of complex feature subbands; and
   creating the complex hyperblock by stacking, along a second dimension, the complex feature subbands.

According to an aspect there is provided a method for processing an input audio signal, comprising:
a feature extractor step for extracting a set of features from values of the input audio signal;
a first neural network, NN, step, to process the set of features through a first NN, to obtain a version of the set of features as a first tensor having a frequency dimension with spectral values;
a feature segmenter step, to segment the first tensor into a plurality of feature subbands;
a second NN step, to process each of the plurality of feature subbands through a common second NN, to obtain a set of result subbands ;
a result composer step, to compose the result subbands onto one single second tensor having a frequency dimension.

According to an aspect there is provided a method for processing an input audio signal, comprising:
a first magnitude-processing step extracting a single second magnitude tensor from magnitude values of the input audio signal; and
a magnitude-and-phase feature combiner step, to combine the single second magnitude tensor with phase values of the input audio signal, to obtain a complex set of features in the shape of a first complex tensor;
a complex-processing portion step, to apply a third NN to the complex tensor, to obtain a complex result which is a processed version of the input audio signal,
wherein the complex-processing step reshapes the first complex tensor from a first shape to a second, hyper block shape, to obtain a complex hyperblock in the second shape, by:
   segmenting the first complex tensor into a plurality of complex feature subbands; and
   creating the complex hyperblock by stacking, along a second dimension, the complex feature subbands.

According to an aspect, there is provided a non-transitory storage unit storing instructions which, executed by a processor, cause the processor to perform one of the methods above.

Each of the methods above may be implemented in a DSP, and each of the apparatuses above may be or be implemented in a DSP.

### Figures

Fig. 1 shows examples of apparatuses according to the present invention.
Figs. 2A, 2B, 3, 4, and 5, show examples of operations according to the present invention.
Figs. 6A, 6B, 6C show examples according to the prior art.

### Examples

Here below, tensors are often taken into account. Tensors are generalizations of matrixes, and can have 1, 2, 3, or more dimensions. A vector is a tensor which has one dimension with multiple elements. A matrix is a tensor which has two dimensions with elements for each dimension. A three-dimensional tensor has three dimensions, with elements for each of the three dimensions. Here below, often there are considered:
1) a first dimension, which is a frequency dimension (along which different spectral values are placed)
2) a second dimension, which is a channel dimension (and in some cases different channels host different elements of a same complex number, such as a real-value channel and an imaginary-value channel or a magnitude-value channel and a phase-value channel, while in some other cases different channels host different blocks, forming a hyperblock)
3) a third dimension (which can be optional), which is a time dimension (it is often left open whether the time dimension is 1 or another number greater than 1; this choice could often be irrelevant for the purpose of the present technique).

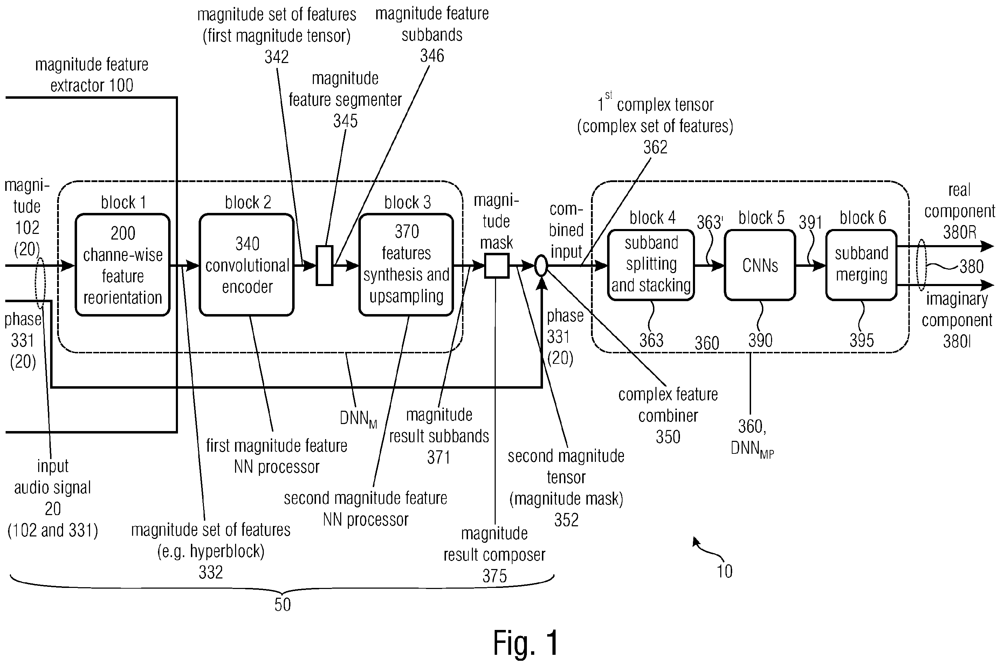

Fig. 1 shows an example of an apparatus 10 for processing an audio input audio signal 20. The apparatus 10 may process the input audio signal 20 to obtain a processed version (output audio signal) of the input audio signal 20 (e.g., a masked version) and/or to output a classification result (e.g., by classifying the input audio signal between a plurality of preferable discrete classification results). In general terms, with particular reference to Fig. 1, there may be the following apparatuses:
1) An apparatus 50 (DNN_{M}), which takes feature values 102 and outputs a second magnitude tensor 352 (in which case the feature values 102 and the second magnitude tensor 371 operate on features 102 which are not necessarily (but could be) magnitude values of an input signal 20 but are in general values of (or taken from) the input signal 20), e.g. after having applied a mask 375 (not necessarily a magnitude mask).
2) An apparatus (e.g. 10) which has a first magnitude-processing processor (50, DNN_{M}) processing only magnitudes 102 of an input signal 20, and a complex-processing portion processor (360, DNN_{M}) which also processes the output 371 of the first magnitude-processing processor (50, DNN_{M}) and applies a NN (390)
3) An apparatus (e.g. 10) which has a first magnitude-processing processor (50, DNN_{M}) applying at least one neural network (340, 370) only to magnitudes 102 of an input signal 20, and a complex-processing portion processor (360, DNN_{M}) which also processes the output 371 of the first magnitude-processing processor (50, DNN_{M}), with or without applying a NN (390).

Here below it will be normally referred to "magnitude" values for the values 102, 20, 332, 342, 345, 371, even though it shall be understood that those values can be generalized as feature values which are not necessarily magnitude values (e.g., when the apparatus is the apparatus 50, DNN_{M}).

The input audio signal 20 may be in (or at least converted onto) a shape of a vector of spectral values, or a sequence thereof (e.g. a time sequence of frames, each frame being a vector of spectral values). The vector of spectral values may have a frequency dimension with spectral values of increasing frequencies, for example, e.g. from a DC value towards higher frequencies. Each spectral value may have a magnitude part and a phase part (e.g. converted from real part and imaginary part).

The apparatus 10 may include a magnitude feature extractor 100 (e.g., to perform input feature computation). The feature extractor 100 may convert the input audio signal 20 onto magnitude values 102, e.g. grouped in magnitude values vectors. Each magnitude values vector 102 may be developed, for example, according to a first dimension (e.g. frequency dimension). It is possible that the magnitude values 102 are also developed according to a third dimension (e.g., time) (the magnitude value vectors may be in a time sequence of frames, but it could be that each magnitude value vector is processed independently of the other ones in some examples). In general terms, we may imagine that the magnitude values vector 102 is a result of a time-frequency conversion from a time domain (e.g., of the input signal 20) onto the frequency domain (e.g., in Fourier transform such as fast Fourier transform, FFT, short-time Fourier transform, STFT, wavelet transform, or the like) (the conversion from time domain to frequency domain may be present in the apparatus 10 although not shown in the figures). The magnitude values may therefore be developed in at least two dimensions (e.g. first, frequency dimension and third, time dimension), but may have one single channel (i.e. the size of its channel dimension being 1), thereby resulting in having a shape of 1-dimensional or 2-dimensional tensor. The magnitude values 102 may have a first shape. For example, in Fig. 1 the first shape involves 16 elements (features, entries, TF bins) in the frequency dimension (first dimension) and some elements along the third (time) dimension, and one single channel.

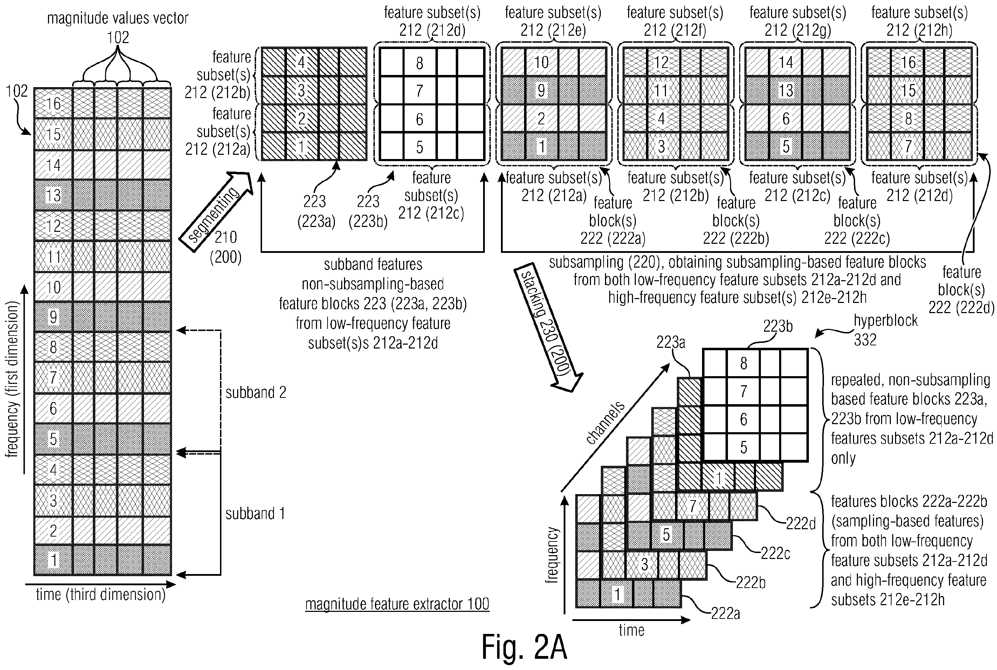

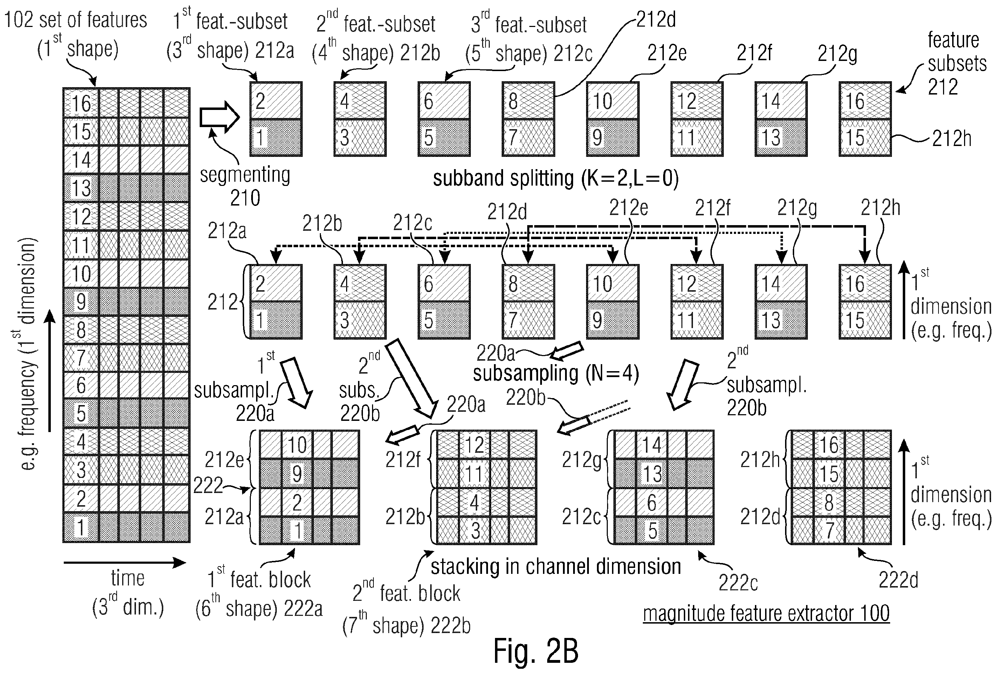

The apparatus 10 or 50 (and more in particular the magnitude feature extractor 100) may include a feature block generator 200 (e.g. channel-wise feature reorientation block) which may reshape the magnitude values 102 from the first shape to a second shape (e.g. the second shape having one dimension more than the first shape). The magnitude values in the second shape (indicated with 332) are called here magnitude set of blocks, and are often instantiated by a hyper block. With reference to Figs. 2A and 2B (which show slightly different variants), the reshaping (also called "reorienting") may involve the following three main operations:
1. Segmenting (210) the magnitude values 102 into a plurality of magnitude feature subsets (splitting magnitude windows or segmenting magnitude windows). The magnitude feature subsets are referred to collectively with reference to number 212, and are indicated singularly with the symbols 212a, 212b, 212c, 212d, 212e, 212f, 212g, and 212h. The operation of segmenting may be understood as splitting the magnitude vector 102 in the first (frequency) dimension. This operation may involve the ordering of the obtained feature subsets according to increasing positions in the first (frequency) dimension. I.e.:
   a. The first magnitude feature subset 212a formed by the first two magnitude features 1 and 2 (which may have the lowest frequencies) of the magnitude values vector 102 (entries, TF bins, etc.) along the first dimension;
   b. the second magnitude feature subset 212b formed by the subsequent magnitude features 3 and 4 along the first dimension;
   c. the third magnitude feature subset 212c formed by magnitude features 5 and 6 along the first dimension;
   d. the fourth magnitude feature subset 212d formed by the magnitude features 7 and 8 along the first dimension;
   e. the fifth magnitude feature subset 212e formed by the magnitude features 9 and 10 along the first dimension;
   f. the sixth magnitude feature subset 212f formed by the magnitude features 11 and 12 along the first dimension;
   g. the seventh magnitude feature subset 212g formed by the magnitude features 13 and 14 along the first dimension; and
   h. the eighth magnitude feature subset 212h formed by the magnitude features 15 and 16 of the set of magnitude values vector 102 along the first dimension.
   Each magnitude feature subset 212 (212a-212h) may be an interval between two magnitude feature positions in the first dimension (frequency dimension). When the first dimension is a frequency dimension, the last magnitude features (e.g., 15, 16) may be the highest harmonics, while one and two may be the lowest harmonics (one may be, for example the DC component). It will be shown that there is the possibility that some overlapping range is defined for different feature subsets. (e.g. when an overlapping value L, also called "overlapping factor", is provided which is 0≤L<1, with L=0 in case of non-overlapping, and L>0 in case of overlapping; the greater the overlapping range, the higher L; the smaller the overlapping range, the lower L). For example, in case of L=0.5, two consecutive subsets share the 50% of features, which in the case of the 2-feature subsets 212a-212h of Figs. 2A and 2B means that there is one single shared feature (e.g. the highest-frequency feature of the lower-frequency subset is also the lowest-frequency feature of the higher-frequency subset); etc. However, it has been understood that it is also possible to avoid the overlapping (i.e. L=0), and the magnitude feature subsets 212 (212a-212) may therefore be non-mutually overlapping.
2. Performing a subsampling 220 of the magnitude feature subsets 212 (212a-212h) to generate a plurality of magnitude feature blocks 222 (the feature blocks are indicated collectively with 222, but singularly Figs. 2A and 2B show four feature blocks 222a, 222b, 222c, and 222d). In particular, the magnitude feature blocks 222 (222a, 222b, 222c, and 222d) may be generated by performing a stacking of the subsampled magnitude feature subsets (212a-212h), in particular by stacking the magnitude subsample feature subsets along the first (frequency) dimension. As can be seen in particular from Fig. 2B, for example, from the first magnitude subsampling instantiation 220a, the fifth magnitude feature subset 212e is stacked on the first magnitude feature subset 212a along the first dimension to generate a single first magnitude feature block 222a with four elements (entries, features, TF bins, etc.) in the first (frequency) dimension. It may be seen in particular that the second magnitude feature 2 of the set of magnitude values 102 ends being adjacent to the ninth feature 9 in the first (frequency) dimension. In addition, by virtue of the second subsampling instantiation 220b, the sixth feature subset 212f is stacked on the second feature subset 212b, thereby forming a second feature block 222b. Therefore, the original fourth feature 4 of the magnitude values vector 102 in the first dimension ends being adjacent with the eleventh element 11 in the first (frequency) dimension. Analogously, a third feature block 222c is formed by stacking the seventh feature subset 212g onto the third feature subset 212c. A fourth feature block 222d is formed by stacking, in the first (frequency) dimension, the eighth feature subset 212h onto the fourth feature subset 212d. The stacking instantiations may be understood as juxtaposing operations in the first dimension. In practice, through the feature segmenting 210 and the subsampling 220, the original sequence of the set of features is rearranged according to a different ordering.
   (As shown in Fig. 2A, but not in Fig. 2B, there is the possibility of repeating the low-frequency subsets 212a-212d, thereby forming subband features, i.e. non-subsampling magnitude feature blocks 223 (223a and 223b) by stacking together the low-frequency, subsets 212a-212d, without subsampling. Hence, it is possible to repeat the low-frequency subsets 212a-212d, both in the non-subsampling magnitude feature blocks 223a and 223b and in the subsampled-based magnitude feature blocks 222a, 222b, 222c, 222d. Hence, the low-frequency subsets 212a-212d are repeated twice, while the high-frequency subsets 212e-212h are not repeated, and are sued only once.)
3. At operation 230 (Fig. 2A, 2B), it is possible to generate a magnitude feature hyper block 332 by stacking, along the second dimension (e.g., channel dimension), the feature blocks 222a-222d (subsampling-based feature blocks) one over the other. For example, the fourth magnitude feature block (subsampling-based feature block) 222d is stacked on the third magnitude feature block 222c (subsampling-based feature block), which in turn is stacked on the second magnitude feature block 222b (subsampling-based feature block), which in turn is stacked on the first magnitude feature block 222a (subsampling-based feature block). As can be seen from Figs. 2A and 2B, the first magnitude feature 1 (in subsampling-based feature block 222a) becomes adjacent to the third magnitude feature 3 (in subsampling-based feature block 222b) in the second (channel) dimension. The third magnitude feature 3 is also adjacent to the fifth magnitude feature 5 (in subsampling-based feature block 222c) in the second dimension. The fifth magnitude feature 5 is also adjacent to the seventh magnitude feature 7 in the second dimension. The stacking 230 in the second (e.g. channel) direction may be carried out by taking into consideration the ordering of the magnitude feature blocks. For example, the first magnitude feature block 222a may be identified by the lowest frequency (or the lowest ordered element along the first dimension); the second feature object 222b may also be identified as the second lowest feature block because its lowest frequency (or more in general the lowest position in the first dimension) is the third position; and so on. Accordingly, the order of the stacking according to the second dimension may be predetermined by the positions of the elements in the magnitude feature blocks (e.g., for each magnitude feature block 222a-222d, the element which is taken from the lowest position in the magnitude values vector 102 may determine the order of the feature block with respect to the other feature blocks; e.g. the first magnitude feature block 222a has the magnitude feature 1 which, in the magnitude values vector 102, has a lower position than feature 3 of magnitude feature block 222b, thereby determining, in the feature hyper block 332, that the magnitude feature block 222a has a lower position than the feature block 222b).
   (In the example of Fig. 2A the non-subsampling-based feature blocks 223 (223a, 223b) from the low-frequency feature subsets 212a-212d are also stacked in the second, channel dimension. Hence, the low-frequency features are repeated at least twice. In this case, the first magnitude feature 1 in non-subsampling-based feature block 223a is adjacent to the fifth magnitude feature 5 in non-subsampling-based feature block 223b, thereby increasing variety).

It is to be noted that the generation of the hyper block (or of any other magnitude set of features) 332 may be performed according to different techniques in some examples.

As shown in Fig. 1, the set of features (e.g. reshaped feature hyper block 332) in the second shape may be inputted into a first neural network (NN) processor 340 which operates a neural network. The first NN may be a convolutional NN, and may operate as a convolutional encoder. The output 342 of the first neural network processor 340 will be a first magnitude result (first magnitude tensor) 342.

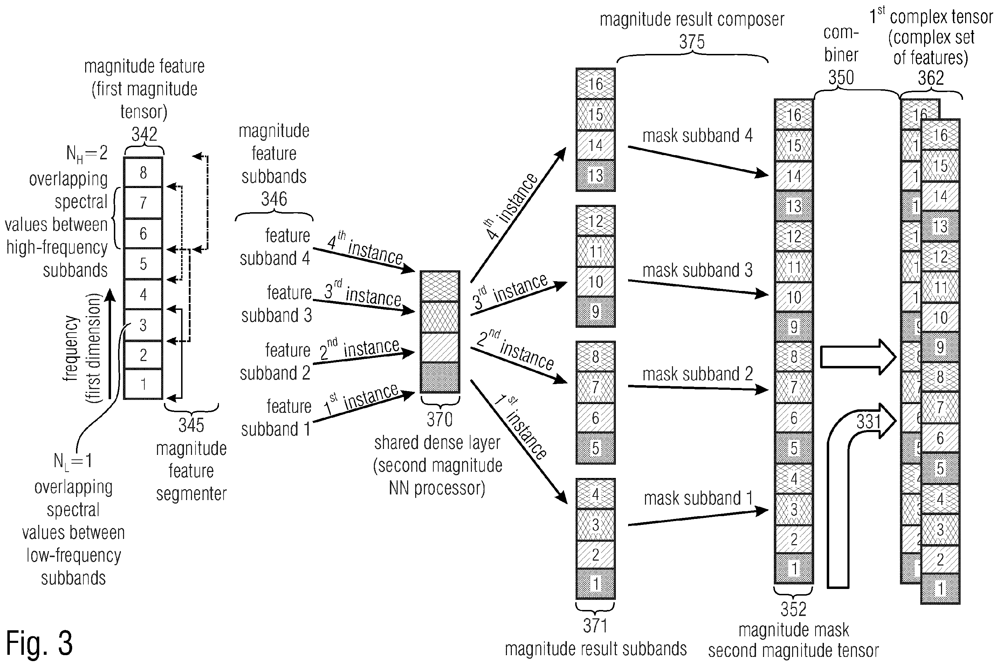

The first magnitude tensor 342 may be developed along the frequency dimension through a number of magnitude spectral values which are less than the number of spectral values of the input signal 20 (and of the magnitude values vector 102). For example, if the magnitude values vector 102 has 16 magnitude spectral values, the first magnitude tensor 342 may have 8 spectral values. E.g., the number of magnitude spectral values of the first magnitude tensor 342 outputted by the first NN processor 340 may be a submultiple of the number of magnitude spectral values of the magnitude values vector 102 (but different choices may be made). More in general, the first magnitude tensor 342 may have a number (8 in Fig. 3) of magnitude spectral values which is smaller than the number (16 in Fig. 1) of the magnitude values vector 102, thereby reducing the computational complexity.

The first magnitude tensor 342 may be provided to a magnitude feature segmenter 345 (Fig. 3). The magnitude feature segmenter 345 may segment the first magnitude tensor 342 onto a plurality of magnitude feature subbands 346. The magnitude feature subbands 346 may have the same number of spectral values each (e.g. three spectral values each). Each magnitude feature subband 346 may have a plurality of contiguous magnitude spectral values of the first magnitude tensor 342. For example, the magnitude feature subband 1 in Fig. 3 has the three lowest frequencies (1^{st} to 3^{rd}); the magnitude feature subband 2 has the 3^{rd} to 5^{th} lowest frequencies; the magnitude feature subband 3 has the 5^{th} to 7^{th} lowest frequencies; and the magnitude feature subband 4 has the 6^{th} to 8^{th} lowest frequencies. As can be seen, each of the magnitude spectral values of the first magnitude tensor 342 is placed in at least one feature subband 346. In some examples (like in Fig. 3) some adjacent magnitude feature subbands share at least one magnitude spectral value. For example, the spectral value 3 is shared by the features subbands 1 and 2. Hence, at least one (e.g. each) magnitude feature subband 346 overlaps with at least one immediately adjacent magnitude feature subband 346 by at least one spectral value.

The number of shared (overlapping) magnitude spectral values may be the same along the first (frequency) dimension. However, the number of shared (overlapping) magnitude spectral values may change along the first (frequency) dimension. In some examples, the higher the frequencies of the magnitude spectral values in the adjacent feature subbands, the higher the number of shared magnitude spectral values. For example, the subbands 1 e 2 (lowest frequency subbands) share only one single spectral value (3), and also the subbands 2 e 3 (middle frequency subbands) share only one single spectral value (5), but the subbands 3 and 4 (highest frequency subbands) share two spectral values (6 and 7). Since the lowest frequency magnitude spectral values are more important in audio signals, it has been understood that it may be preferable to have less shared overlappings (or no overlappings at all) between lower frequency subbands, but having more overlappings between higher frequency subbands. It can be said that the overlapping rule can be non-linear. Therefore:
at least one high-frequency magnitude feature subband overlaps with at least one immediately adjacent magnitude feature subband by a number N_{H} of shared magnitude spectral values (e.g. subbands 3 and 4 share N_{H}=2 magnitude spectral values);
at least one low-frequency magnitude feature subband does not overlap with any other immediately adjacent magnitude feature subband or overlaps with at least one immediately adjacent magnitude feature subband by a number N_{L}≥1 of spectral values, with N_{H}>N_{L} (e.g. subbands 1 and 2 share N_{L}=1 magnitude spectral value, and N_{L}=1<2=N_{H}).

It can be said that the number of overlappings increases from the lowest subbands towards the highest subbands, and it may be that:
each first overlapping between a first subband and a second subband (the second subband overlapping the first subband but having non-overlapping spectral values of higher frequency than the non-overlapping spectral values of the first subband) has the same number as, or smaller number than a second overlapping between the second subband and a third subband (the third subband overlapping the second subband but having non-overlapping spectral values of higher frequency than the non-overlapping spectral values of the second subband) has the same number as, or smaller number, but
the lowest-frequency overlapping between the lowest-frequency subband and the second-lowest-frequency subband has a smaller number N_{L} (e.g. N_{L}=1 in Fig. 3) of overlappings than the number N_{H} (e.g. N_{H}=2 in Fig. 3) of overlappings between the highest-frequency subband and the second-highest-frequency subband.

All the magnitude feature subbands 346 may have the same number of magnitude spectral values each (e.g. three magnitude spectral values for each magnitude feature subband 346 in Fig. 3).

According to an aspect of the present invention, the apparatus 10 may include a second NN processor 370. The second NN processor 370 may process each of the plurality of magnitude feature subbands 346 through a common second magnitude NN, to obtain a set of magnitude result subbands 371. Notably, the second NN processor 370 may independently process each of the plurality of magnitude feature subbands 346 through a same plurality of weights which are proper of the common second magnitude NN. Hence, there is independently obtained each result subband 371. For example, the second magnitude NN is instantiated once for each magnitude feature subband 346: at the 1^{st} instance the second magnitude NN is inputted with the feature subband 1; at the 2^{nd} instance the second magnitude NN is inputted with the feature subband 2; at the 3^{rd} instance the second magnitude NN is inputted with the feature subband 3; at the 4^{th} instance the second magnitude NN is inputted with the feature subband 4. The operations of the NN in the different instances are independent from each other. The weights of the second magnitude NN are the same, and the outputs 371 are obtained independently from each other. The second magnitude NN (in the second NN processor 370) may be a dense NN. The weights of the second magnitude NN may be learned by training (e.g. by minimizing a cost function and by backpropagation). The fact that the same second magnitude NN is instantiated multiple times for different subbands 346 ends requiring a reduced number of weights, which therefore causes a reduced request of stored weights.

The second magnitude NN may be designed to have an upsampling effect. For example, from each magnitude feature subsampling 346 (which in Fig. 3 has thee magnitude spectral values), there may be an output 371 (mask subbands) constituted by more magnitude spectral values (e.g. four magnitude spectral values in Fig. 3). The second magnitude NN therefore performs an upsampling by increasing the number of spectral values of each magnitude feature subband 346 onto a larger number of spectral values of the magnitude result subband 371. Notably, the complexive output obtained from all the magnitude result subbands 371 (e.g. for a same magnitude values vector 102) may have a number of magnitude spectral values (the number being 16 in Fig. 3) which is the same number of the magnitude values vector 102 (the number being 16 in Figs. 2A and 2B).

The fact that in the second NN processor 370 multiple subbands 342 have been subjected to different instances of the same NN permits to greatly reduce the memory consumption required by the second magnitude NN. For example:
- In the case of Fig. 3, if the second magnitude NN is a dense NN with one input layer (with 3 input values in input), one output layer (with 4 output values output) and no hidden layer, then the number of weights to be memorized are just 12 (because 3*4=12).
- In a variant without overlapping and with the subbands 346 having 4 values and the magnitude result subbands 371 having 4 values, if the second magnitude NN is a dense NN with one input layer (with 4 input values in input), one output layer (with 4 output values output) and no hidden layer, then the number of weights to be memorized are just 16 (because 4*4=16).
- (instead, if we wanted to upsample from the 8 magnitude spectral values of the first magnitude tensor 342 to 16 spectral values without segmenting, we should need 8*16=128, much more than 12 and 16! Hence, with the present technique, the memory consumption is greatly reduced, and the computational waste is also reduced.)

The apparatus 10, 50 may include a magnitude feature composer 375, which composes the magnitude result subbands 371 onto one single second magnitude tensor 352 having a frequency dimension. The single second magnitude tensor 352 may be called magnitude mask. The magnitude feature composer 375 may operate by stacking magnitude result subbands 371 of higher and higher frequencies. For example, the magnitude feature composer 375 may stack to each magnitude result subband 371 the adjacent immediately higher frequency magnitude result subband 371. Said in other terms, the order (developed according to increasing frequencies) among the magnitude features subbands 346 is the same order according to which the magnitude result subbands 371 are staked one on another.

The complex-processing processor (DNN_{MP}, 360) is now discussed. Despite the complex- processing processor (DNN_{MP}, 360) being advantageously used in combination with the apparatus 50, it is not strictly requested that the same NNs are used as in blocks 340 and 370. However, the description of the complex-processing processor (DNN_{M}, 360) is exemplified by taking into account the apparatus 50, as well.

The second magnitude tensor 352 may provide a magnitude mask e.g. in the examples in which the DNN_{M} is trained to perform a masking operation. The second magnitude tensor 352 may be provided to a combiner 350. The combiner 350 may provide a combined version 362 of the second magnitude tensor 352 (complex tensor 362, complex set of features 362), in combination with the phase values 331 of the input value 20. The phase values 331 (phase set of features) may be displaced as a phase spectral values vector 331 with phase spectral values along a frequency dimension, in positions corresponding to the positions of the magnitude spectral values in the magnitude spectral values vector 102. E.g. also in the phase spectral values vector 331 there may be a n-th position, and in that n-th position there is the phase spectral value corresponding to the n-th magnitude spectral value of the same input signal frame 20.

The complex-processing processor 360 may be indicated with DNN_{MP} because it processes both phases and magnitudes. The output 380 of the complex-processing processor 360 may have a real component 380R and an imaginary component 380I (however, it is possible that in some examples magnitude and phase are provided outputted as 380). Subsequently, the output 380 (which is also indicated with 380, to indicate the result of the neural network processed by the neural network processor 300) may reconvert the result 380 onto a time domain version of it and/or may be used for output a classification result.

Upstream to (or included in) the complex-processing processor 360 (DNN_{MP}) there may be a (not explicitly shown) complex-value converter from complex values expressed as magnitudes and phases onto the same complex values expressed as real values and imaginary values. Hence, for each same spectral value in the frequency dimension and in the time dimension, we may have, downstream the complex-value converter, a real-values channel and an imaginary-values channel instead of a magnitude-values channel and a phase-value channel. In some examples, the conversion may be within or downstream to block 390 and/or within or downstream to block 395.

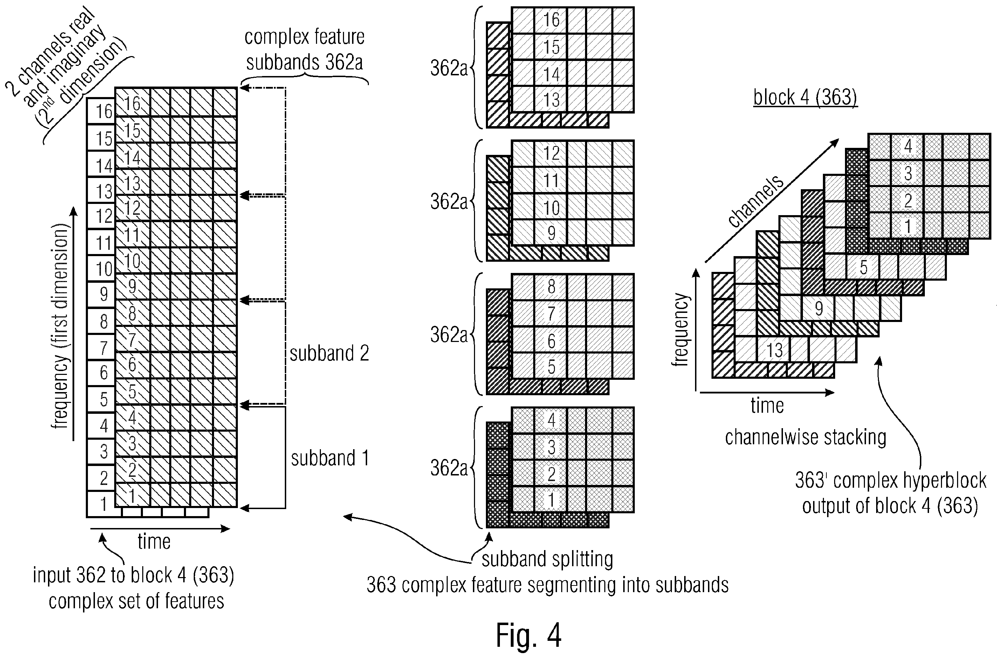

The complex-processing processor 360 (DNN_{MP}) may include a complex reshaping block 363 to reshape the first complex tensor 362 from a first shape (e.g., the tensor of Fig. 3, having 16 spectral values and 2 channels, and a certain number of values in the time domain, which is 1 in Fig. 3) to a second, hyper block shape, to obtain a complex hyperblock 363' (Fig. 4) in the second shape. Fig. 4 shows an example of the operations of the complex reshaping block 363. Fig. 4 shows four complex tensors 362 (each having 16 spectral values in the frequency dimension and 2 channels in the second, channel dimension, and 1 value in the time dimension) in a temporal sequence. Each complex tensor 362 is mainly developed in vertical along the frequency dimension, and has two channels (one for real values and one for imaginary values), and 1 single value in the time dimension, thereby having (in Fig. 4) 32 spectral values (16 real values and 16 imaginary values).

The complex tensor 362 may, in block 363, be segmented into a plurality of complex feature subbands 362a. Each complex feature subband 362a may have a plurality of contiguous complex spectral values of the first complex tensor 362. For example, the complex feature subband 1 in Fig. 4 has the four lowest frequencies (1st to 4th); the complex feature subband 2 has the 5rd to 9th lowest frequencies; the complex feature subband 3 has the 9th to 12th lowest frequencies; and the complex feature subband 4 has the 13th to 16th lowest frequencies. As can be seen, each of the complex spectral values of the first complex tensor 362 is placed in at least one complex feature subband 362a. In some examples (like in Fig. 3) some adjacent complex feature subbands could share at least one complex spectral value. However, in the present case, no overlapping is preferably defined. Therefore, the complex tensor 362 may result partitioned in at least two (e.g. at least three) complex feature subbands 362a (and each subband may have a number of spectral values, in the frequency dimension, which is a submultiple of the complex tensor 362). Since each complex feature subband 362a is complex, it has two channels (real-values channel and imaginary-values channel).

Subsequently, the complex feature subbands 362a may be stacked one over the other in the channel dimension (e.g. second dimension), e.g. without subsampling. In this case, the resulting complex hyperblock 363' has, for each tensor 362 (coming from the same magnitude vector value 102) dimension 4x8 (because of the 4 real spectral values + 4 imaginary spectral values, in total 8, and 4 values in the frequency dimension). Fig. 4 shows four timely contiguous complex hyperblocks 363'. In other examples, it may be that the complex hyperblock 363' has four values in the time dimension, and it that case it would have 4x8x4 elements.

The complex hyperblock 363' may be ingested in a third NN 390. The third NN 390 may be a convolutional NN (CNN). The third NN 390 may neither subsample nor upsample.

The output 391 of the third NN 390 may be also a hyperblock, e.g. with the same number of spectral values per dimension as the complex hyperblock 363'.

Subsequently, the hyperblock 391 may be processed by stacking along the frequency dimension the real spectral values, to obtain a 16x1 real tensor (vector) and by stacking along the frequency dimension the imaginary spectral values, to obtain a 16x1 imaginary tensor (vector).

In this case, it is preferred to avoid overlapping between the segments.

It is to be noted that, with the techniques within the techniques disclosed above for the complex-processing portion processor (360, DNN_{MP}) the complexity is greatly reduced. The spatial or frequency dimension is reduced and so on the convolution kernel needs to move less and subsequently result it complexity reduction.

With respect to the prior art discussed above, the prior art's problems described above are solved:
- By using the proposed feature reorientation (reshaping) method and technique in block (200), we achieve better depthwise correlation between features in each of the channels. In Figs. 2A and 2B, the time-frequency (TF) bins of the first block 222a (displaced in the first channel) (with TF bins 1, 2, 9, 10) and the second block 222b (displaced in the second channel) (with TF bins 5, 6, 13, 14) are now more correlated in terms of their position in the depth/channel dimension. The closest TF bin to 1 in the depth dimension is 3 (it is reminded that the "depth dimension" is the "second dimension", which may be the "channel dimension"). The distance between features in depth dimension will also not be affected, when the spatial/frequency dimension of input features increases.
- This approach also solves the band limitation problem of Fig. 6C. As this splitting method is not anymore in sequential order, so zeros arising from the band limitation problem will not be any more concentrated only in some channels, rather will be distributed across all channels. This results in more stable behavior from the DNN model in D1 processing block.
- This approach makes use of the TF feature's correlation properties for increasing convolutional receptive field. For our proposed method, if the first convolutional layer of D1 processing block is using kernel size of 3 in frequency dimension as before, the effective receptive filed will be now 3*N, as the features in depth dimension are assumed to be correlated now.

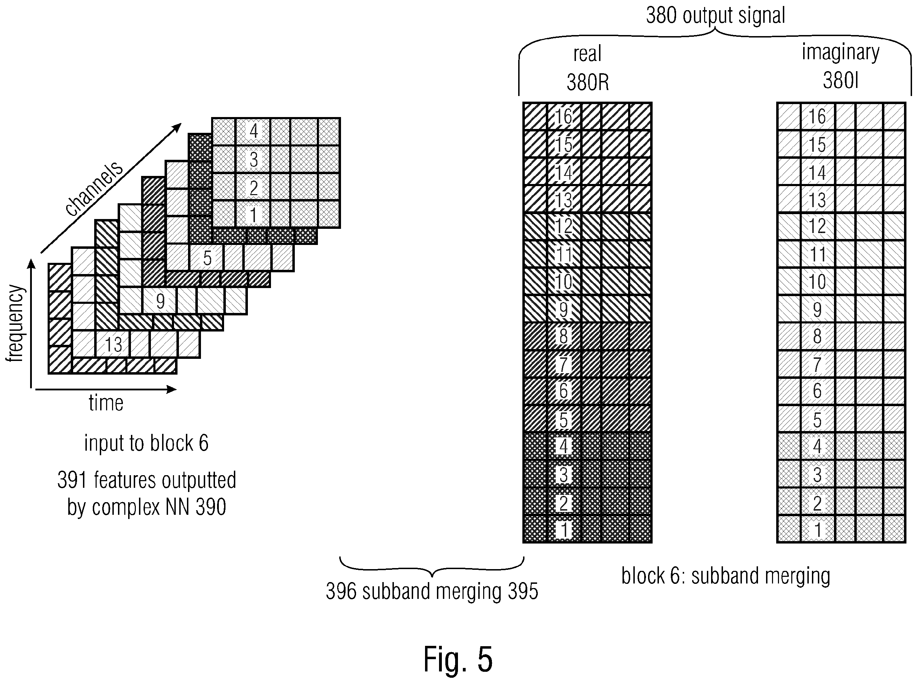

Further to these advantages, a further reduction of memory storage required is achieved by the fact that the single second NN (370) has a reduced number of weights, because the weights are repeated for multiple feature subbands 346, thereby requiring less amount of memory to store (and also learn) the weights. A reduced computational power is attained by the techniques of Figs. 4 and 5.

It is to be noted that the present techniques can be implemented in a digital signal processor (DSP), therefore realizing an ultra low memory and low complexity NN-based speech enhancement for a DSP. For example, the apparatus 50 or 100 may be a DSP or may be implemented in a DSP.

### Discussion

We discuss techniques for designing a deep NN, DNN, based audio processing solution with ultra-low memory and low computational complexity to run on DSPs.

A main idea in this invention is to develop a two-stage processing based DNN model with ultra-low memory and low complexity so that it can perform different audio processing tasks on memory constrained DSP processors.

A schematic diagram of the proposed solution has been shown in Fig. 1. The overall processing includes (e.g. is consisting of) two main DNN blocks, **DNN_{M}** (50) and **DNN_{MP} (360).** Input 20 to the processing may be, in some examples, the power law compressed magnitude features (See, for example, Ref No. 4) (or another kind of features, e.g. magnitude features) 102. These features 102 may be first processed by apparatus 50 **(DNN_{M}) e.g.** to estimate a magnitude mask 352 (tensor). The magnitude mask 352 may then be combined with the phase 331 of the input signal 20 and further processed by the **DNN_{MP} (360)** to estimate and/or reconstruct and/or measure the real and imaginary components 380 (3801, 308R) of the desired signals (Ref No. 1).

In the proposed design, **DNN_{M}** may include (e.g. consist of) mainly three blocks. Block 1 (200): channel-wise feature reorientation, Block 2 (340): e.g. convolutional encoder (based on a first NN) and Block 3 (370) (based on a second NN): features synthesis and upsampling. The memory reduction for the whole model compared to prior art is mainly contributed by Block 3 (370): features synthesis and upsampling of **DNN_{M}.**

**DNN_{MP}** may include (e.g. consist of) of three blocks also. These blocks are less contributing to memory reduction compared to prior art, however, introduction of the Block 4 (363): subband splitting and stacking contributes to overall complexity reduction of **DNN_{MP}.**

**Block 1 (200)** - **Channel-wise Feature Reorientation:** An idea of channel-wise feature reorientation has been proposed in two separate patent applications (Ref No. 2 and 3). For facilitating better feature extraction by the Block 2 (340, convolutional encoder), in the proposed design, we use a combination of subband splitting and sampling-based channel-wise feature reorientation method (200). A schematic diagram of the adopted method is shown in Figs. 2A and 2B. The design choice of Fig. 2B (as compared to Fig. 2A) is chosen to emphasize more on lower frequency features, as most energy of the audio signals are concentrated in lower subbands.

**Block 2 (340)** - **Convolutional Encoder:** This block 340 may include (e.g. consist of) of few causal convolutional layers to extract meaningful features for the specified task. Each of the layers (or more in general at least one of them) may perform downsampling (e.g. by any of striding, max pooling, average pooling) on the frequency axis to reduce the frequency dimension further to attain low dimensional latent and/or bottleneck features.

**Block 3 (370)** - **Features Synthesis and Upsampling:** This block 370 may include (e.g. consist of) mainly of two different kinds of layers- shared RNN and shared linear/dense layer. The use of shared RNNs already been proposed to learn time dependency in literature (Ref No. 5). The shared RNNs reduce the number of parameters by using a same RNN for multiple subband processing to produce latent features in a convolutional recurent network. In our proposed solution, as we employ a two-stage processing, we need to estimate a magnitude mask from the latent features. Normally the latent dimension is much lower than the mask dimension. So, we do up-sampling and resynthesis of latent features. To have a better trade-off between complexity and parameters counts, we employ a shared dense layer to do the task. This also works as a learnable shared synthesis filter-banks, as these filters upsample and synthesis particular frequency subband of the estimated mask from a linearly/non-linearly overlapped or non-overlapped latent feature sets.

In Fig. 3, the working of the shared dense layer is shown. In this example, we have a 8 dimensional latent features. However, we need to estimate a magnitude mask which is 16 dimensional. So, we can employ a dense layer with 4 units (represent a mask subband with dimension 4), which takes 3 dimensional features as inputs (latent features subband). So, we need to learn a synthesis filterbanks with 3*4=12 filters (shared dense layer), which can upsample and estimate multiple mask subbands of dimension 4 from latent features subbands. The latent features subbands are non-linearly overlapped with increasing overlap factor to give more importance to lower subbands, as most energy is typically concentrated there. However, the proposed method works with other configurations also.

**Block 4 (363)** - **Subband splitting:** We follow the same approach of channelwise subband splitting as mentioned in Block 1 (200) and (Ref 2). In our proposed case, we use only the subband features without any overlap (similarly as shown in Figure 2). This is to reduce complexity of the following CNN Block-5 (390).

**Block 5 (399)** - **CNNs:** This block comprises (e.g. consists of) usual convolutional layers as mentioned in (Ref 1 and 6) to jointly enhance the real and imaginary component.

**Block 6 (395)- Subband Merging:** To get the original dimension of the desired features, we employ a sequential merging method describing in (Ref 2, 395)

Some aspects:
1. The use of combinations of multiple blocks from 1 to 6 (can at least include shared dense layer in 370) as described in the methods in the same sequential order to design and/or train and/or deploy a DNN model for achieving ultra-low memory and complexity.
2. A shared dense layer as described in block 3 (370), which approximates or estimates a learned or deterministic synthesis filter-bank using linear/non-linear overlapped or non-overlapped latent features to estimate some intermediate outputs (e.g. intermediate magnitude mask) or final outputs (e.g. magnitude mask) or desired signal component (e.g. magnitude)
3. The use of channel-wise subband splitting (Block 4, 363) technique with its corresponding subband merging method (Block 6, 395) in the second stage of the DNN model for further complexity reduction (the model may be an ultra low memory, ULM, model).

### Further characterization of some figures

Fig. 1: Two Stage Processing for ULM Model Designing

Fig. 2A: Channelwise feature reorientation with combination of subband splitting and sampling-based techniquesFig. 3: Feature Synthesis and upsampling with shared dense layer

### Aspects

According to an aspect, there is disclosed an apparatus (e.g. 10) for processing an input audio signal (e.g. 20), comprising:
a feature extractor (e.g. 100) for extracting a set of features (e.g. 332) from values (e.g. 102) of the input audio signal (e.g. 20);
a first neural network, NN, processor (e.g. 340), to process the set of features (e.g. 332) through a first NN, to obtain a version of the set of features (e.g. 342) as a first tensor having a frequency dimension with spectral values;
a feature segmenter (e.g. 345), to segment the first tensor e.g. (342) into a plurality of feature subbands (346);
a second NN processor (e.g. 370), to process each of the plurality of feature subbands (e.g. 346) through a common second NN, to obtain a set of result subbands (e.g. 371);
a result composer (e.g. 375), to compose the result subbands (e.g. 371) onto one single second tensor (e.g. 352) having a frequency dimension.

According to an aspect, the second NN processor (e.g. 370) may independently process each of the plurality of feature subbands (e.g. 346) through a same plurality of weights which are specific of the common second NN (e.g. 370) and which do not change with the feature subbands (e.g. 346), to independently obtain each result subband (e.g. 371) of the set of result subbands.

According to an aspect, the feature segmenter (e.g. 345) may segment the first tensor (e.g. 342) into the plurality of feature subbands (e.g. 346) in such a way that at least one feature subband (e.g. 346) overlaps with at least one immediately adjacent feature subband (e.g. 346) by at least one spectral value.

According to an aspect, the feature segmenter (e.g. 345) may segment the first tensor (e.g. 342) into the plurality of feature subbands (e.g. 346) in such a way that at least one high-frequency feature subband (e.g. 346) overlaps with at least one immediately adjacent feature subband (e.g. 346) by a number N_{H}≥1 of spectral values along the frequency dimension,
and in such a way that at least one low-frequency feature subband (e.g. 346), along the frequency dimension, does not overlap with any other immediately adjacent feature subband (e.g. 346) or overlaps with at least one immediately adjacent feature subband (e.g. 346) by a number N_{L}≥1 of spectral values, with N_{H}>N_{L}.

According to an aspect, the set of features (e.g. 342) may have a number of elements, in the frequency dimension, which is smaller than a number of elements in the frequency dimension of the single second tensor (e.g. 352), and
the set of features (e.g. 342) has the number of elements, in the frequency dimension, which is smaller than the number of elements in the values (e.g. 102) of the input audio signal in the frequency dimension.

According to an aspect, the second NN (e.g. 370) may perform an upsampling by increasing the number of spectral values of each feature subband (e.g. 346) onto a larger number of spectral values of each result subband (e.g. 371).

According to an aspect, the second magnitude NN may include at least one linear and/or dense learnable layer.

According to an aspect, the feature extractor (e.g. 100) may be configured for:
segmenting (e.g. 210) the values into at least three feature subsets (e.g. 212), each feature subset having a subset shape;
performing a subsampling (e.g. 220) of the feature subsets (e.g. 212) to generate a plurality of feature blocks (e.g. 222) by stacking selected sets of subsampled feature subsets along the frequency dimension;
creating (e.g. 230) a feature hyperblock (e.g. 332) which is the set of features to be inputted to the first NN processor (e.g. 340).

According to an aspect, the apparatus may be configured in creating (e.g. 230) the feature hyperblock (e.g. 332), to further insert, in the feature hyperblock (e.g. 332), at least one non-subsampling block obtained from at least one low-frequency feature subset (e.g. 212) as obtained from the segmenting (e.g. 210), without further inserting in the feature hyperblock (e.g. 332) any non-subsampling block obtained or obtainable from higher-frequency feature subset(e.g. s) (e.g. 212), so that the at least one low-frequency feature subset (e.g. 212) is repeated twice in the hyperblock (e.g. 332) and the higher-frequency feature subset(e.g. s) is(e.g. are) unique in the hyperblock.

According to an aspect, the feature extractor (e.g. 100) may extract the set of features (e.g. 332) as magnitudes of the input audio signal (e.g. 20), thereby discarding the phases of the input audio signal (e.g. 20),
the apparatus further comprising a phase-and-magnitude combiner (e.g. 350), to combine the single second tensor (e.g. 352) with a phase set of features (e.g. 331) from the phases (e.g. 102) of the input audio signal, to obtain a complex set of features (e.g. 362) which is a processed version of the input audio signal.

According to an aspect, the apparatus may further comprise a complex-processing processor (e.g. 360), to process the complex set of features (e.g. 362), to obtain a complex result (e.g. 380) which is a processed version of the input audio signal (e.g. 20).

According to an aspect, the complex-processing processor (e.g. 360) may reshape the first complex tensor (e.g. 362) from a first shape to a second, hyper block shape, to obtain a complex hyperblock (e.g. 363') in the second shape, by
segmenting the first complex tensor (e.g. 362) into a plurality of complex feature subbands;
creating the complex hyperblock (e.g. 363') by stacking, along a second dimension, the complex feature subbands.

According to an aspect, the complex-processing processor (e.g. 360, DNN_{MP}) may apply a third NN (e.g. 390) to the complex set of features (e.g. 362) which has a shape of a first complex tensor, to obtain a complex result (e.g. 380) which is a processed version of the input audio signal.

According to an aspect, the third NN may have complexity reduced with respect to each of the first and second NNs.

According to an aspect, there is disclosed an apparatus (e.g. 10) for processing an input audio signal (e.g. 20), comprising:
a first magnitude-processing processor (e.g. 50, DNN_{M}) configured for extracting a single second magnitude tensor (e.g. 352) from magnitude values (e.g. 102) of the input audio signal; and
a magnitude-and-phase feature combiner (e.g. 350), to combine the single second magnitude tensor (e.g. 352) with phase values (e.g. 331) of the input audio signal, to obtain a complex set of features (e.g. 362) in the shape of a first complex tensor (e.g. 362);
a complex-processing portion processor (e.g. 360, DNN_{M}) configured to apply a third NN (e.g. 390) to the complex tensor (e.g. 362), to obtain a complex result (e.g. 380) which is a processed version of the input audio signal,
wherein the complex-processing processor (e.g. 360, DNN_{M}) is configured to reshape the first complex tensor (e.g. 362) from a first shape to a second, hyper block shape, to obtain a complex hyperblock (e.g. 363') in the second shape, by:
   segmenting the first complex tensor (e.g. 362) into a plurality of complex feature subbands; and
   creating the complex hyperblock (e.g. 363') by stacking, along a second dimension, the complex feature subbands.

According to an aspect, the complex-processing processor (e.g. 360) may perform a resampling by rearranging positions of the complex feature hyperblock in positions corresponding to the input audio signal.

According to an aspect, the apparatus may apply no overlap between the plurality of complex feature subbands.

According to an aspect, there is disclosed a method for processing an input audio signal (e.g. 20), comprising:
a feature extractor step (e.g. 100) for extracting a set of features (e.g. 332) from values (e.g. 102) of the input audio signal (e.g. 20);
a first neural network, NN, step (e.g. 340), to process the set of features (e.g. 332) through a first NN, to obtain a version of the set of features (e.g. 342) as a first tensor having a frequency dimension with spectral values;
a feature segmenter step (e.g. 345), to segment the first tensor (e.g. 342) into a plurality of feature subbands (e.g. 346);
a second NN step (e.g. 370), to process each of the plurality of feature subbands (e.g. 346) through a common second NN, to obtain a set of result subbands (e.g. 371);
a result composer step (e.g. 375), to compose the result subbands (e.g. 371) onto one single second tensor (e.g. 352) having a frequency dimension.

According to an aspect, there is disclosed a method for processing an input audio signal (e.g. 20), comprising:
a first magnitude-processing step (e.g. 50, DNN_{M}) extracting a single second magnitude tensor (e.g. 352) from magnitude values (e.g. 102) of the input audio signal; and
a magnitude-and-phase feature combiner step (e.g. 350), to combine the single second magnitude tensor (e.g. 352) with phase values (e.g. 331) of the input audio signal, to obtain a complex set of features (e.g. 362) in the shape of a first complex tensor (e.g. 362);
a complex-processing portion step (e.g. 360, DNN_{M}), to apply a third NN (e.g. 390) to the complex tensor (e.g. 362), to obtain a complex result (e.g. 380) which is a processed version of the input audio signal,
wherein the complex-processing step (e.g. 360, DNN_{M}) reshapes the first complex tensor (e.g. 362) from a first shape to a second, hyper block shape, to obtain a complex hyperblock (e.g. 363') in the second shape, by:
   segmenting the first complex tensor (e.g. 362) into a plurality of complex feature subbands; and
   creating the complex hyperblock (e.g. 363') by stacking, along a second dimension, the complex feature subbands.

Each of the methods above may be implemented in a DSP, and each of the apparatuses above may be or be implemented in a DSP.

According to an aspect, there is provided a non-transitory storage unit storing instructions which, executed by a processor (e.g. a DSP), cause the processor to perform any of the methods above.

### Further embodiments

Here, different inventive examples, embodiments and aspects are described. Also, further embodiments will be defined by the enclosed claims. It should be noted that any embodiments as defined by the claims can be supplemented by any of the details (features and functionalities) described in the chapters above.

Also, the embodiments described in the following and/or previous chapters can be used individually, and can also be supplemented by any of the features in another chapter, or by any feature included in the claims. Also, it should be noted that individual aspects described herein can be used individually or in combination.

Thus, details can be added to each of said individual aspects without adding details to another one of said aspects. It should also be noted that the present disclosure describes, explicitly or implicitly, features of a mobile communication device and of a receiver and of a mobile communication system. Thus, any of the features described herein can be used in the context of a mobile communication device and in the context of a mobile communication system (e.g. comprising a satellite). Therefore, disclosed techniques are suitable for all fixed satellite services (FSS) and mobile satellite services (MSS). Moreover, features and functionalities disclosed herein relating to a method can also be used in an apparatus. Furthermore, any features and functionalities disclosed herein with respect to an apparatus can also 30 be used in a corresponding method. In other words, the methods disclosed herein can be supplemented by any of the features and functionalities described with respect to the apparatuses. Also, any of the features and functionalities described herein can be implemented in hardware or in software, or using a combination of hardware and software, as described below. Depending on certain implementation requirements, examples may be implemented in hardware. The implementation may be performed using a digital storage medium, for example a floppy disk, a Digital Versatile Disc (DVD), a Blu-Ray (registered trademark) Disc, a Compact Disc (CD), a Read-only Memory (ROM), a Programmable Read-only Memory (PROM), an Erasable and Programmable Read-only Memory (EPROM), an Electrically Erasable Programmable Read-Only Memory (EEPROM) or a flash memory, having electronically readable control signals stored thereon, which cooperate (or are capable of cooperating) with a programmable computer system such that the respective method is performed. Therefore, the digital storage medium may be computer readable. Generally, examples may be implemented as a computer program product with program instructions, the program instructions being operative for performing one of the methods when the computer program product runs on a computer. The program instructions may for example be stored on a machine-readable medium.

Other examples comprise the computer program for performing one of the methods described herein, stored on a machine-readable carrier. In other words, an example of method is, therefore, a computer program having a program-instructions for performing one of the methods described herein, when the computer program runs on a computer. A further example of the methods is, therefore, a data carrier medium (or a digital storage medium, or a computer-readable medium) comprising, recorded thereon, the computer program for performing one of the methods described herein. The data carrier medium, the digital storage medium or the recorded medium are tangible and/or non-transitionary, rather than signals which are intangible and transitory. A further example comprises a processing unit, for example a computer, or a programmable logic device performing one of the methods described herein. A further example comprises a computer having installed thereon the computer program for performing one of the methods described herein. A further example comprises an apparatus or a system transferring (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver. In some examples, a programmable logic device (for example, a field programmable gate array) may be used to perform some or all of the functionalities of the methods described herein. In some examples, a field programmable gate array may cooperate with a microprocessor in order to perform one of the methods described herein. Generally, the methods may be performed by any appropriate hardware apparatus. The above described examples are illustrative for the principles discussed above. It is understood that modifications and variations of the arrangements and the details described herein will be apparent. It is the intent, therefore, to be limited by the scope of the impending patent claims and not by the specific details presented by way of description and explanation of the examples herein.

### References:

1. Patent application: Apparatus and Method for Processing an Information Signal using a Multi-Stage Processing (WO2024200470 A1)
2. Patent application: Apparatus, Method and Computer Program for Processing an Audio Signal Using Feature Segmentation and Feature Combination (WO202420046 A1)
3. Patent application: Channelwise Feature Reorientation and Merging with Neighbouring Features for Robust Low Complexity DNN based Audio Processing, EP 24178893.4
4. Patent application: Apparatus, Method or Computer Program for Processing an Information Signal using a Compression of a Dynamic Range (WO2024200469)
5. Paper: REAL-TIME DENOISING AND DEREVERBERATION WTIH TINY RECURRENT U-NET, Hyeong-Seok Choi, Sungjin Park, lie Hwan Lee, Hoon Heo, Dongsuk Jeon, Kyogu Lee, retrieved in https://arxiv.org/abs/2102.03207
6. Paper: ULTRA LOW COMPLEXITY DEEP LEARNING BASED NOISE SUPPRESSION, Shrishti Saha Shetu; Soumitro Chakrabarty; Oliver Thiergart; Edwin Mabande, Published in: ICASSP 2024 - 2024 IEEE International Conference on Acoustics, Speech and Signal Processing (ICASSP), DOI: 10.1109/ICASSP48485.2024.10448353, Date Added to IEEE Xplore: 18 March 2024.

## Claims

1. Apparatus (10) for processing an input audio signal (20), comprising:
a feature extractor (100) for extracting a set of features (332) from values (102) of the input audio signal (20);
a first neural network, NN, processor (340), to process the set of features (332) through a first NN, to obtain a version of the set of features (342) as a first tensor having a frequency dimension with spectral values;
a feature segmenter (345), to segment the first tensor (342) into a plurality of feature subbands (346);
a second NN processor (370), to process each of the plurality of feature subbands (346) through a common second NN, to obtain a set of result subbands (371);
a result composer (375), to compose the result subbands (371) onto one single second tensor (352) having a frequency dimension.

2. The apparatus of claim 1, wherein the second NN processor (370) is configured to independently process each of the plurality of feature subbands (346) through a same plurality of weights which are specific of the common second NN (370) and which do not change with the feature subbands (346), to independently obtain each result subband (371) of the set of result subbands.

3. The apparatus of any of the preceding claims, wherein the feature segmenter (345) is configured to segment the first tensor (342) into the plurality of feature subbands (346) in such a way that at least one feature subband (346) overlaps with at least one immediately adjacent feature subband (346) by at least one spectral value.

4. The apparatus of claim 3,
wherein the feature segmenter (345) is configured to segment the first tensor (342) into the plurality of feature subbands (346) in such a way that at least one high-frequency feature subband (346) overlaps with at least one immediately adjacent feature subband (346) by a number N_{H}≥1 of spectral values along the frequency dimension,
and in such a way that at least one low-frequency feature subband (346), along the frequency dimension, does not overlap with any other immediately adjacent feature subband (346) or overlaps with at least one immediately adjacent feature subband (346) by a number N_{L}≥1 of spectral values, with N_{H}>N_{L}.

5. The apparatus of any of the preceding claims, wherein the set of features (342) has a number of elements, in the frequency dimension, which is smaller than a number of elements in the frequency dimension of the single second tensor (352), and
the set of features (342) has the number of elements, in the frequency dimension, which is smaller than the number of elements in the values (102) of the input audio signal in the frequency dimension.

6. The apparatus of any of the preceding claims, wherein the second NN (370) performs an upsampling by increasing the number of spectral values of each feature subband (346) onto a larger number of spectral values of each result subband (371).

7. The apparatus of any of the preceding claims, wherein the second magnitude NN includes at least one linear and/or dense learnable layer.

8. The apparatus of any of the preceding claims, wherein the feature extractor (100) is configured for:
segmenting (210) the values into at least three feature subsets (212), each feature subset having a subset shape;
performing a subsampling (220) of the feature subsets (212) to generate a plurality of feature blocks (222) by stacking selected sets of subsampled feature subsets along the frequency dimension;
creating (230) a feature hyperblock (332) which is the set of features to be inputted to the first NN processor (340).

9. The apparatus of claim 8, configured, in creating (230) the feature hyperblock (332), to further insert, in the feature hyperblock (332), at least one non-subsampling block obtained from at least one low-frequency feature subset (212) as obtained from the segmenting (210), without further inserting in the feature hyperblock (332) any non-subsampling block obtained or obtainable from higher-frequency feature subset(s) (212), so that the at least one low-frequency feature subset (212) is repeated twice in the hyperblock (332) and the higher-frequency feature subset(s) is(are) unique in the hyperblock.

10. The apparatus of any of the preceding claims, wherein the feature extractor (100) is configured to extract the set of features (332) as magnitudes of the input audio signal (20), thereby discarding the phases of the input audio signal (20),
the apparatus further comprising a phase-and-magnitude combiner (350), to combine the single second tensor (352) with a phase set of features (331) from the phases (102) of the input audio signal, to obtain a complex set of features (362) which is a processed version of the input audio signal.

11. The apparatus of claim 10, further comprising a complex-processing processor (360), to process the complex set of features (362), to obtain a complex result (380) which is a processed version of the input audio signal (20).

12. The apparatus of claim 11, wherein the complex-processing processor (360) is configured to reshape the first complex tensor (362) from a first shape to a second, hyper block shape, to obtain a complex hyperblock (363') in the second shape, by
segmenting the first complex tensor (362) into a plurality of complex feature subbands;
creating the complex hyperblock (363') by stacking, along a second dimension, the complex feature subbands.

13. The apparatus of any of claims 11-12, wherein the complex-processing processor (360, DNN_{MP}) is configured to apply a third NN (390) to the complex set of features (362) which has a shape of a first complex tensor, to obtain a complex result (380) which is a processed version of the input audio signal.

14. The apparatus of claim 13, wherein the third NN has complexity reduced with respect to each of the first and second NNs.

15. Apparatus (10) for processing an input audio signal (20), comprising:
a first magnitude-processing processor (50, DNN_{M}) configured for extracting a single second magnitude tensor (352) from magnitude values (102) of the input audio signal; and
a magnitude-and-phase feature combiner (350), to combine the single second magnitude tensor (352) with phase values (331) of the input audio signal, to obtain a complex set of features (362) in the shape of a first complex tensor (362);
a complex-processing portion processor (360, DNN_{M}) configured to apply a third NN (390) to the complex tensor (362), to obtain a complex result (380) which is a processed version of the input audio signal,
wherein the complex-processing processor (360, DNN_{M}) is configured to reshape the first complex tensor (362) from a first shape to a second, hyper block shape, to obtain a complex hyperblock (363') in the second shape, by:
segmenting the first complex tensor (362) into a plurality of complex feature subbands; and
creating the complex hyperblock (363') by stacking, along a second dimension, the complex feature subbands.

16. The apparatus of any of claims 11-15, wherein the complex-processing processor (360) is configured to perform a resampling by rearranging positions of the complex feature hyperblock in positions corresponding to the input audio signal.

17. The apparatus of any of claims 11-16, configured to apply no overlap between the plurality of complex feature subbands.

18. A method for processing an input audio signal (20), comprising:
a feature extractor step (100) for extracting a set of features (332) from values (102) of the input audio signal (20);
a first neural network, NN, step (340), to process the set of features (332) through a first NN, to obtain a version of the set of features (342) as a first tensor having a frequency dimension with spectral values;
a feature segmenter step (345), to segment the first tensor (342) into a plurality of feature subbands (346);
a second NN step (370), to process each of the plurality of feature subbands (346) through a common second NN, to obtain a set of result subbands (371);
a result composer step (375), to compose the result subbands (371) onto one single second tensor (352) having a frequency dimension.

19. A method for processing an input audio signal (20), comprising:
a first magnitude-processing step (50, DNN_{M}) extracting a single second magnitude tensor (352) from magnitude values (102) of the input audio signal; and
a magnitude-and-phase feature combiner step (350), to combine the single second magnitude tensor (352) with phase values (331) of the input audio signal, to obtain a complex set of features (362) in the shape of a first complex tensor (362);
a complex-processing portion step (360, DNN_{M}), to apply a third NN (390) to the complex tensor (362), to obtain a complex result (380) which is a processed version of the input audio signal,
wherein the complex-processing step (360, DNN_{M}) reshapes the first complex tensor (362) from a first shape to a second, hyper block shape, to obtain a complex hyperblock (363') in the second shape, by:
segmenting the first complex tensor (362) into a plurality of complex feature subbands; and
creating the complex hyperblock (363') by stacking, along a second dimension, the complex feature subbands.
